# EUROPEAN PATENT APPLICATION

(11) **EP 0 854 000 A1**
(43) Date of publication of application: **22.07.1998**
(21) Application number: 98300024.1
(22) Date of filing: 05.01.1998
(51) Int. Cl.: B23K 1/00

(54) **Method for manufacturing a multi-tube heat exchanger**

(30) Priority: 10.01.1997 JP 14446/97
(71) Applicant: Sanden Corporation, Isesaki-shi, Gunma 372-8502 (JP)
(72) Inventor: Morita, Tomonari, Isesaki-shi, Gunma, 372 (JP)
(74) Representative: Jackson, Peter Arthur

(57) **Abstract**

A method is disclosed for forming a multi-tube heat exchanger (1) having a pair of tanks (2, 3) and a plurality of heat transfer tubes (4) fluidly interconnecting the tanks (2, 3). A supporting jig (21) is secured prior to a brazing process to support a tank wall (8) of at least one tank (2) of said pair of tanks (2, 3) to prevent a deflection of said tank wall (8). As a result, a multi-tube heat exchanger (1) which is free from deformation during and after brazing process, can be obtained.

## Description

The present invention relates to a method for manufacturing a multi-tube heat exchanger, and more particularly to an improved manufacturing method suitable for brazing a pair of tanks and a plurality of heat transfer tubes.

A conventional multi-tube heat exchanger generally has a pair of tanks separated from each other and a plurality of heat transfer tubes fluidly interconnecteding the tanks. Tube insertion holes are provided on tank walls of the respective tanks. End portions of the respective tubes are inserted into respective corresponding tube insertion holes and brazed thereto.

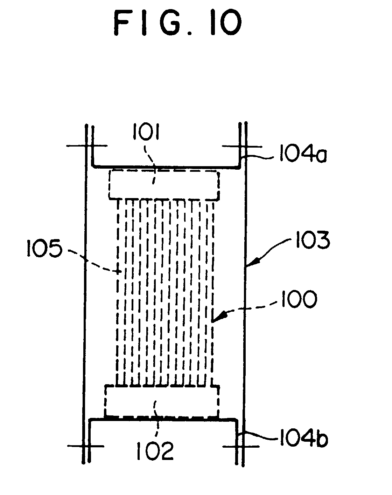

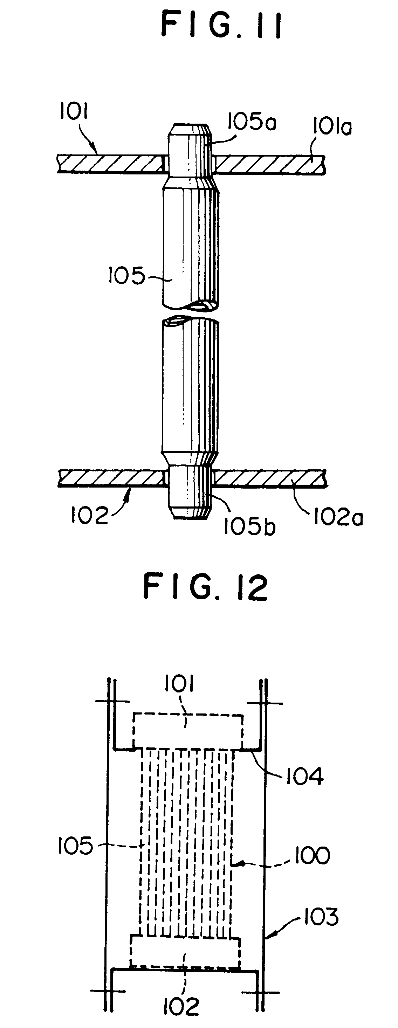

In the manufacture of such a multi-tube heat exchanger, for example, as shown in Fig. 10, a pair of tanks 101 and 102 of multi-tube heat exchanger 100 are fixed at a predetermined positional relationship by tank supporting members 104a and 104b of a jig 103. In this state, a plurality of heat transfer tubes 105 are brazed to and fluidly interconnect tanks 101 and 102 at a standing configuration. One end 105a of each heat transfer tube 105 engages tank wall 101a of tank 101 and the other end 105b of transfer tube 105 engages tank wall 102a of the other tank 102, for example, as shown in Fig. 11.

In such a manufacturing method, however, when heated for brazing, tanks 101 and 102 are fixed from both sides by tank supporting members 104a and 104b of jig 103, respectively, as shown in Fig. 10. The axial expansion of heat transfer tubes 105 is restricted by the jig 103. The coefficient of thermal expansion of the jig 103 is generally lower than that of the parts forming the heat exchanger, particularly, that of the heat transfer tubes 105. As a result, heat transfer tubes 105 may bow or deform during or after brazing.

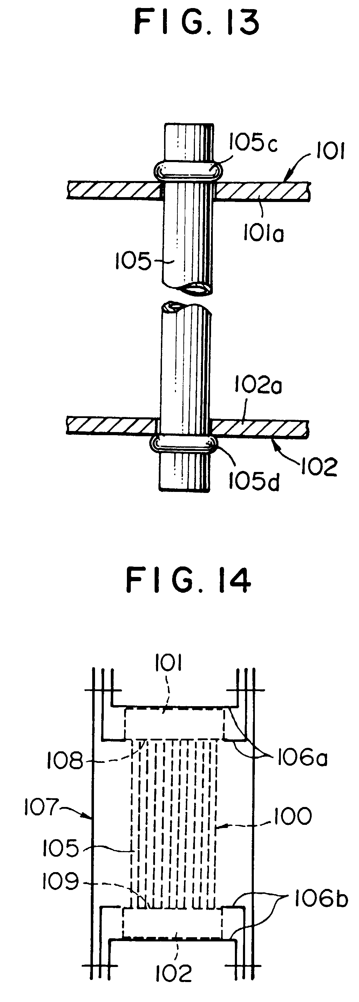

In order to solve such problems, the applicant previously proposed the arrangements shown in Fig. 12 (Japanese Patent Application HEI 8-132611) and Fig. 14 (Japanese Patent Application HEI 8-201328). In Fig. 12, tank 101 of heat exchanger 100 is suspended by tank supporting member 104 of jig 103. The multi-tube heat exchanger is structured, for example, as shown in Fig. 13. Engaging portion 105c at one end of each heat transfer tube 105 engages tank wall 101a of tank 101 and engaging portion 105d at the other end engages tank wall 102a of tank 102. The weight of tank 102 is applied to heat transfer tubes 105 by the engagement of respective engaging portions 105c and 105d with respective tank walls 101a and 102a, during the above-described suspension. As tension is applied to heat transfer tubes 105 by the weight of tank 102, brazing and cooling may be carried out without bowing or bending of the heat transfer tubes 105.

In Fig. 14, jig 107 is formed with a material having a coefficient of thermal contraction lower than a coefficient of thermal contraction of a material forming heat transfer tubes 105, and tanks 101 and 102 of heat exchanger 100 are fixed by supporting members 106a and 106b of jig 107. Bowing or bending of heat transfer tubes 105 can be prevented by allowing thermal elongation of at least one end of each heat transfer tube 105 into a tank in the heating process for brazing, and by causing tension to heat transfer tubes 105 as a result of the difference of coefficients of thermal contraction of heat transfer tubes 105 and jig 107 in the cooling process after brazing.

In the above-described proposals, however, in order to give a tension to heat transfer tubes during heating for brazing or cooling after brazing, at least one tank must be fixed at a predetermined position. Therefore, in the brazing process, particularly during cooling after heating for brazing, a deflection of tank walls 108 and 109 (Fig. 14) may occur by the thermal contraction of heat transfer tubes.

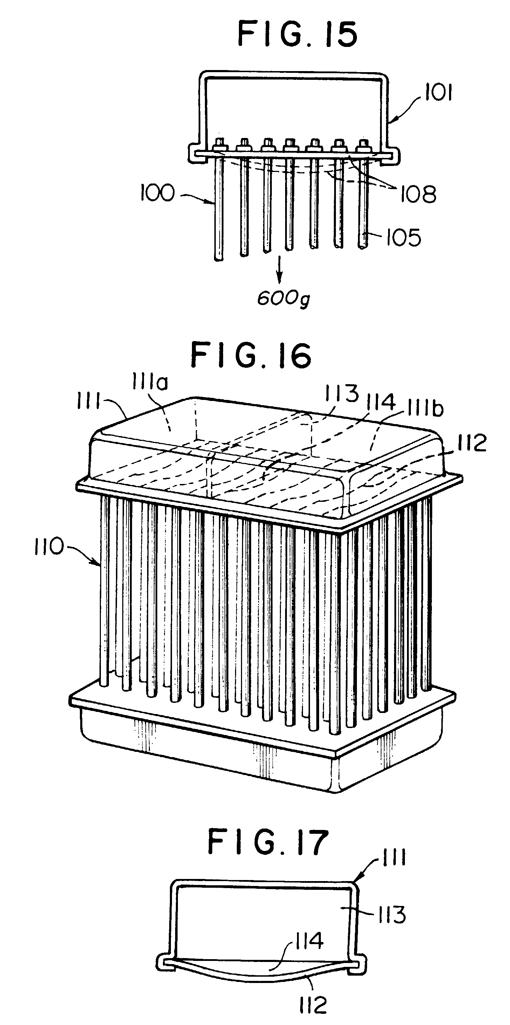

Moreover, in the brazing process, particularly tank wall 108 of upper tank 101 is likely to be deflected by the self-weight of heat transfer tubes 105 and the softening due to the heating of tank wall 108. Each heat transfer tube 105 composed of aluminum has, for example, a weight of about 0.6 g, and, for example, in a case where there are 1,000 heat transfer tubes 105 in the heat exchanger 100, a load of about 600 g is applied to tank wall 108 of upper tank 101 connected with heat transfer tubes 105. This load of about 600 g does not particularly cause a problem in a condition of room temperature because tank wall 108 is made of aluminum and generally has a thickness of about 1 mm which is sufficient to support the load. But in a brazing furnace controlled at a high temperature (for example, about 500°C ), the aluminum material is thermally softened, and tank wall 108 may be deflected even by the load of about 600 g due to the self-weight of heat transfer tubes 105, for example, as shown by dotted lines in Fig. 15. This problem of deflection of tank wall 108 becomes greater as heat exchanger 100 becomes larger and the number of heat transfer tubes 105 increases.

Such a deflection of tank wall 108 particularly causes the following problem. As shown in Figs 16 and 17, in a heat exchanger 110 having a partition 113 in a tank 111, divided chambers 111a and 111b must be sealed from each other by partition 113. If tank wall 112 is deflected during brazing, the wall 112 separates from the edge of partition 113, and a gap 114 is generated between partition 113 and tank wall 112. A heat medium (for example, refrigerant) may then leak between chambers 111a and 111b, and heat exchanger 110 may not function properly. These and other disadvantages of the prior art are sought to be overcome by the invention of the preferred embodiments.

It would be desirable to provide a method for manufacturing a multi-tube heat exchanger which can help ensure proper brazing performance for any-type or any-size multi-tube heat exchanger by preventing deflection of a tank wall of a tank and by preventing bowing or deformation of heat transfer tubes during the brazing process.

A method for manufacturing a multi-tube heat exchanger according to the present invention is herein provided. The heat exchanger includes a pair of tanks separated from each other and a plurality of heat transfer tubes fluidly interconnecting the pair of tanks. The pair of tanks are brazed to the heat transfer tubes. The manufacturing method comprises the step of securing a supporting jig adjacent an outer surface of a tank wall of at least one tank of the pair of tanks so that the supporting jig extends through a gap between arranged heat transfer tubes, for supporting the tank wall and preventing deflection of the tank wall at least during the brazing process.

Another method for manufacturing a multi-tube heat exchanger according to the present invention comprises the steps : fixing the pair of tanks in a holding jig prior to brazing, the holding jig being formed with a first material having a coefficient of thermal contraction lower than a coefficient of thermal contraction of a second material forming the heat transfer tubes; securing a supporting jig adjacent an outer surface of a tank wall of at least one tank of the pair of tanks so that the supporting jig extends through a gap between arranged heat transfer tubes, for supporting the tank wall and preventing deflection of the tank wall at least during brazing; and causing tension to the heat transfer tubes when cooled after brazing, the tension being applied parallel to an axial direction of the heat transfer tubes as a result of the difference of coefficients of thermal contraction of the heat transfer tubes and the holding jig.

In this manufacturing method, it is preferred that respective ends of each heat transfer tube engage a respective tank wall of each tank. The tank wall of one tank can move relative to the tubes in an axial direction during the brazing process.

The holding jig has a first portion for fixing the first tank, a second portion for fixing the second tank and a supporting portion extending between the first and second portions in a direction parallel to the axial direction of the heat transfer tubes. At least the supporting portion may be formed from the first material, which has a lower coefficient of thermal contraction than that of the heat transfer tubes.

In the manufacturing methods according to the present invention, in a heat exchanger having a partition in at least one tank, it is preferred that at least a part of the supporting jig is disposed at a position of the tank wall corresponding to a position provided with the partition. The supporting jig may comprise either a linearly extending member or a plurality of members. Preferably the supporting jig supports a lower wall of a tank that is positioned as an upper tank during brazing, from an under side of the lower wall.

In the manufacturing methods according to the present invention, the supporting jig is attached for supporting the tank wall of at least one tank. The tank wall is positively supported and the deflection of the tank wall can be reduced during brazing, even if the heat exchanger is made large-sized and the number of heat transfer tubes increases, together with the concomitant weight of said tubes. As a result, proper brazing performance due to reduced deflection of the tank wall may be achieved. Although the supporting jig may be disposed on the tank wall of one tank, it may be disposed on the tank wall of each tank of the pair of tanks. Because this supporting jig is attached so that it extends through a gap formed between arranged heat transfer tubes, changing the design of the heat exchanger to accompany the use of the supporting jig is not necessary.

In the case of a heat exchanger having a partition in at least one tank, the supporting jig is preferably disposed at a position of the tank wall corresponding to a position of the partition. In this condition, the portion of the tank wall provided with the partition is protected against deflection particularly effectively, thereby improving brazing performance between the partition and the inner surface of the tank wall. The partition is generally disposed at a central portion of the wall in the longitudinal direction of the tank, and generally, heat transfer tubes are not disposed in this portion. Therefore, the supporting jig may be easily inserted into and attached onto this portion.

The supporting jig may be comprised of either a single linearly extending member or a plurality of members. In particular, when the supporting jig is formed by a plurality of members, the tank wall is supported over a broad area, and the deflection of the wall may be reduced more effectively. Even when the supporting jig is formed from a single member, if the single member is curved or folded appropriately, a similar amount of support as that provided by a plurality of members may be obtained. Thus, the shape or structure of the supporting jig is not particularly critical, as long as it can be attached on the tank wall and through a gap between arranged heat transfer tubes. The shape or structure of the supporting jig, the number of members forming the supporting jig and the position of attachment thereof may be appropriately selected depending upon size, tube arrangement or shape of the tank of heat exchanger.

Further objects, features, and advantages of the present invention will be understood from the following detailed description of the preferred embodiments of the present invention with reference to the appropriate figures.

Some embodiments of the invention will now be described with reference to appropriate figures, which are given by way of example only, and are not intended to limit the present invention.

Fig. 1 is a perspective view of a multi-tube heat exchanger manufactured by a method according to a first embodiment of the present invention.

Fig. 2 is an enlarged, partial, vertical sectional view of the multi-tube heat exchanger depicted in Fig. 1.

Fig. 3 is a vertical sectional view of a holding and supporting jig employed in the first embodiment of the present invention.

Fig. 4 is a perspective view of an upper tank and a supporting jig as employed in the first embodiment of the present invention.

Fig. 5 is a cross-sectional view of the multi-tube heat exchanger as viewed from the bottom side of the upper tank, showing the attachment of the supporting jig as employed in the first embodiment of the present invention.

Fig. 6 is a perspective view of an upper tank and a supporting jig as employed in a heat exchanger according to a second embodiment of the present invention.

Fig. 7 is a perspective view of an upper tank and a supporting jig as employed in a heat exchanger according to a third embodiment of the present invention.

Fig. 8 is a cross-sectional view of the multi-tube heat exchanger as viewed from the bottom side of the upper tank, showing the attachment of the supporting jig as employed in the third embodiment of the present invention.

Fig. 9 is an enlarged, exploded perspective view of the supporting jig depicted in Fig. 7.

Fig. 10 is a vertical sectional view of a conventional jig.

Fig. 11 is an enlarged, partial, vertical sectional view of the multi-tube heat exchanger depicted in Fig. 10.

Fig. 12 is a vertical sectional view of a jig employed in a method previously proposed by the applicant.

Fig. 13 is an enlarged, partial, vertical sectional view of the multi-tube heat exchanger depicted in Fig. 12.

Fig. 14 is a vertical sectional view of a jig employed in another method previously proposed by the applicant.

Fig. 15 is a partial, vertical sectional view of a multi-tube heat exchanger showing a conventional problem.

Fig. 16 is a perspective view of a multi-tube heat exchanger showing another problem.

Fig. 17 is a vertical sectional view of an upper tank of the multi-tube heat exchanger depicted in Fig. 16.

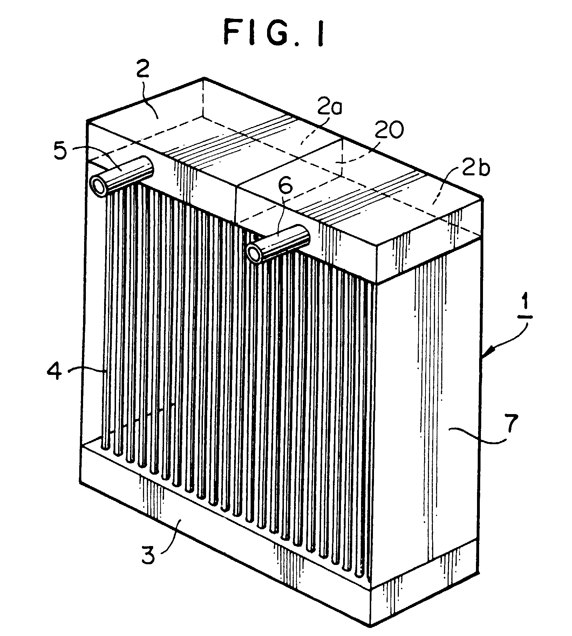

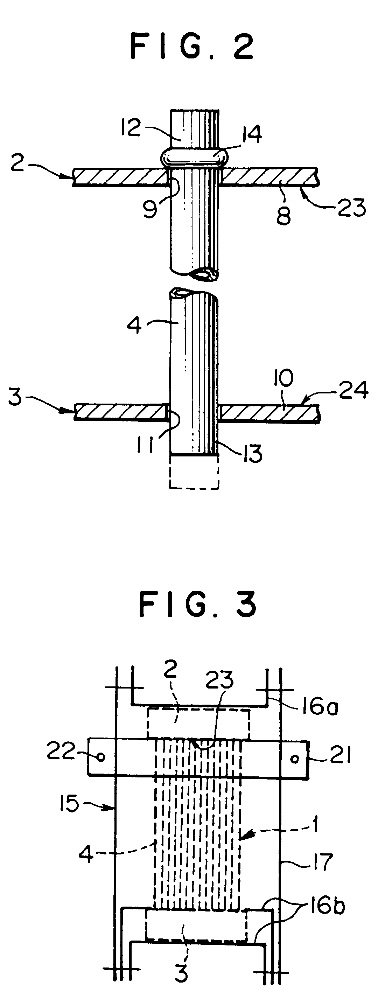

Referring to Figs. 1 and 2, a multi-tube heat exchanger 1 is provided according to a first embodiment. Heat exchanger 1 includes a pair of tanks 2 and 3. A plurality of heat transfer tubes 4 (for example, refrigerant tubes having a circular cross section) fluidly interconnect tanks 2 and 3. A partition 20 is provided in tank 2 for dividing the inside of tank 2 into two chambers 2a and 2b. Inlet pipe 5 and outlet pipe 6 are connected to tank 2, and more particularly, to chambers 2a and 2b, respectively. Side plate 7 is provided between a side of tank 2 and a side of tank 3. A heat exchange medium, for example, refrigerant, is introduced into tank 2 through inlet pipe 5, and after circulation through heat exchanger 1, the heat exchange medium flows out of tank 2 through outlet pipe 6.

As depicted in Fig. 2, a first end portion 12 of each heat transfer tube 4 is inserted into a tube insertion hole 9 defined on tank wall 8 of tank 2, and a second end portion 13 of each heat transfer tube 4 is inserted into a tube insertion hole 11 defined on tank wall 10 of tank 3. Adjacent first end portion 12 of each heat transfer tube 4 is a flange 14 capable of engaging tank wall 8 of tank 2. Flange 14 is formed as a ring-like portion protruding from a periphery of heat transfer tube 4 in a radially outer direction of heat transfer tube 4. Flange 14 engages an upper surface of tank wall 8 (i.e., an inferior surface of tank 2) after heat transfer tube 4 is inserted into tube insertion hole 9 from an upper side. Second end portion 13 of heat transfer tube 4 is formed as a tube. Second end portion 13 of heat transfer tube 4 is inserted into tube insertion hole 11 from an upper side. Second end portion 13 of heat transfer tube 4 is free to move in the axial direction relative to tank wall 10.

A holding jig 15 and a supporting jig 21 for brazing are formed, for example, as depicted in Figs. 3-5. In Fig. 3, holding jig 15 includes a first portion 16a (an upper portion) for fixing first tank 2 (an upper tank), a second portion 16b (a lower portion) for fixing second tank 3 (a lower tank), and a supporting portion 17 extending between first and second portions 16a and 16b in a direction parallel to the axial direction of heat transfer tubes 4. In this embodiment, holding jig 15, particularly, at least supporting portion 17 of holding jig 15 has a coefficient of thermal contraction lower than the coefficient of thermal contraction of heat transfer tubes 4.

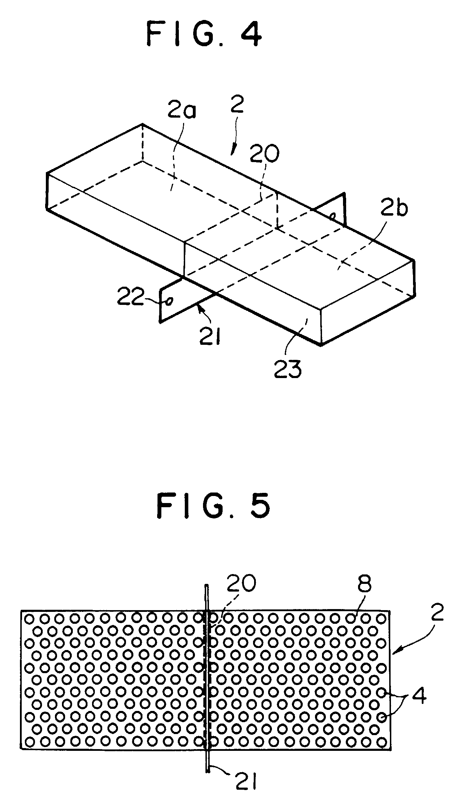

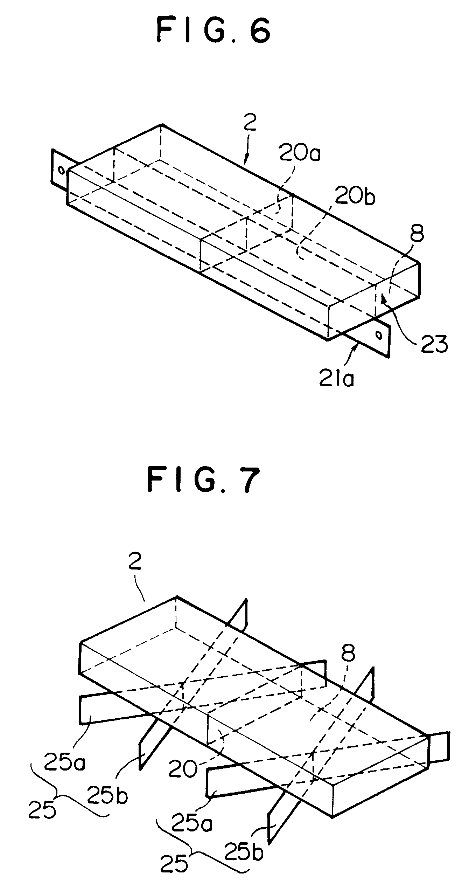

Supporting jig 21 supports tank wall 8 of tank 2 from lower surface 23 of tank wall 8. In the embodiment of Figs. 3-5, supporting jig 21 is formed as a single linearly extending member. Supporting jig 21 is disposed at a position corresponding to a position provided with partition 20, as shown in Fig. 4. Supporting jig 21 is disposed so that it extends through a gap formed between arranged heat transfer tubes 4, as shown in Fig. 5. Holes 22 are provided on each end portion of supporting jig 21. Supporting jig 21 is set at a predetermined position relative to tank 2 by hooks (not shown) that engage holes 22 and fix the position of supporting jig 21.

In this embodiment, multi-tube heat exchanger 1 is assembled and manufactured as follows.

First, as depicted in Fig. 2, heat transfer tubes 4 are inserted through tube insertion holes 9 and into tube insertion holes 11 of tanks 2 and 3, respectively. Flange 14 of each heat transfer tube 4 may be formed either before or after the above-described tube insertion.

In this assembly condition, flange 14 of each heat transfer tube 4 engages an inner surface of tank wall 8. Second end portion 13 of each heat transfer tube 4 is free to move axially in tube insertion hole 11 relative to tank wall 10. This direction is the same direction in which each heat transfer tube 4 elongates during brazing.

Heat exchanger 1 is then brazed in a furnace. Both tanks 2 and 3 are fixed by portions 16a and 16b of holding jig 15, respectively, and supporting jig 21 supports lower surface 23 of tank wall 8 of upper tank 2, as depicted in Fig. 3. During brazing in the furnace, heat transfer tubes 4 elongate in the axial direction. However, because second end portion 13 is free to move in the axial direction relative to tank wall 10 of tank 3, the elongation due to the thermal expansion appears at second end portion 13, as shown by the dotted line in Fig. 2. Because each heat transfer tube 4 is permitted to thermally expand relative to tahk wall 10, bowing, bending or other undesirable deformation of heat transfer tubes 4 can be appropriately minimized.

During brazing, holding jig 15 also elongates in the same direction as that of heat transfer tubes 4. However, the amount of the elongation of holding jig 15 is smaller than that of heat transfer tubes 4.

While cooling after heating for brazing, heat transfer tubes 4 contract in the axial direction. However, because both end portions 12 and 13 of heat transfer tubes 4 are fixed to tanks 2 and 3, respectively, by the coagulated brazing material, the thermal contraction of heat transfer tubes 4 is restricted. Although holding jig 15 also contracts in the same direction, the amount of the thermal contraction of holding jig 15 is smaller than that of heat transfer tubes 4. However, in practice, holding jig 15 and heat transfer tubes 4 are mechanically connected via tanks 2 and 3 and the coagulated brazing material. As a result, tension is applied to heat transfer tubes 4 in the axial direction due to the difference between the coefficients of thermal contraction of holding jig 15 and heat transfer tubes 4. Therefore, the brazed heat exchanger 1 is cooled in a condition where tension is applied to heat transfer tubes 4 in such a way that bowing, bending or deformation of heat transfer tubes 4 may be minimized.

In the brazing process, particularly in the heating for brazing, a downward force tending to cause deflection of tank wall 8 of tank 2 is applied as the weight of heat transfer tubes 4 is exerted upon the heat-softened wall 8. Further, in the cooling after the heating, an additional downward force tending to cause deflection of tank wall 8 of tank 2 is applied due to a difference between the coefficients of thermal contraction of holding jig 15 and heat transfer tubes 4. In this embodiment, however, the presence of supporting jig 21 provided on the lower surface 23 of tank wall 8 of tank 2 minimizes or prevents the deflection of wall 8 that might otherwise occur due to the downward forces.

Moreover, because supporting jig 21 is disposed at a position corresponding to a position provided with partition 20, the deflection of tank wall 8 may be effectively prevented at this position. As a result, separation of the wall 8 from the edge of partition 20 may be prevented, and both members may be properly brazed. Further, because partition 20 is provided generally at a central portion of tank wall 8 in the longitudinal direction of tank 2, the deflection of tank wall 8 may be efficiently reduced by supporting jig 21.

Because supporting jig 21 is designed to fit through a gap between arranged heat transfer tubes 4, supporting jig 21 may be easily inserted into the gap without any interruption. Therefore, changing the design of heat exchanger 1 to accommodate supporting jig 21 is not necessary.

In the above-described embodiment, supporting jig 21 is secured adjacent lower surface 23 of tank wall 8 of tank 2. A similar supporting jig optionally may be secured adjacent upper surface 24 (shown in Fig. 2) of tank wall 10 of lower tank 3 to reduce or prevent deformation in tank wall 10.

Fig. 6 depicts an upper tank 2 and a supporting jig 21a according to a second embodiment of the present invention. In this embodiment, two intersecting partitions 20a, 20b are provided in tank 2. Supporting jig 21a supports lower surface 23 of tank wall 8 of tank 2 at a position corresponding to a position provided with of partition 20b. In such a position, the deflection of tank wall 8 may be reduced or prevented along the longitudinal direction of tank 2.

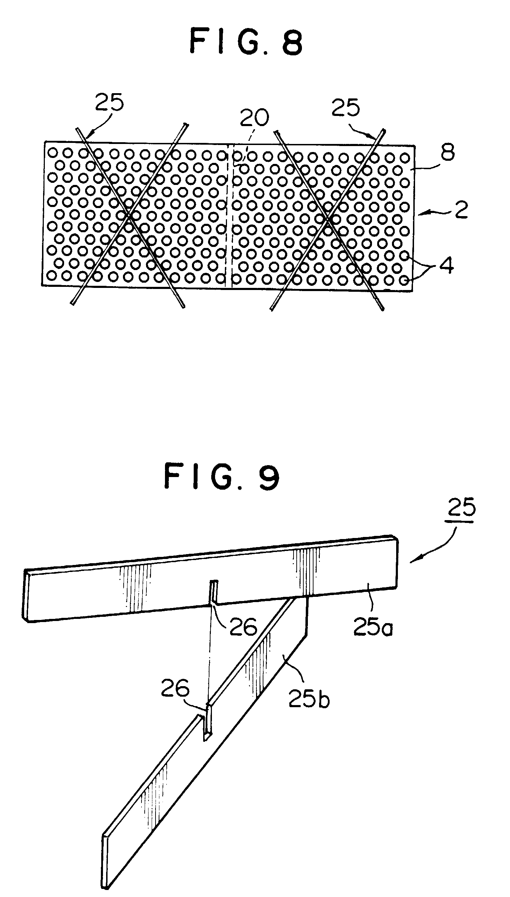

Figs. 7-9 depict a supporting jig 25 according to a third embodiment of the present invention. In this embodiment, supporting jig 25 is formed by two members 25a and 25b intersecting each other in an X-shape. Two supporting jigs 25 are attached in this embodiment. Each of the members 25a and 25b extends through a gap between arranged heat transfer tubes 4, for example, as depicted in Fig. 8. Each of the members 25a and 25b has a slit 26 at a central portion as shown in Fig. 9. Both members 25a and 25b are connected to each other by engagement of the respective slits 26 after insertion through gaps between arranged tubes 4. In such a condition, tank wall 8 of tank 2 may be supported by X-shaped supporting jigs 25 more strongly and more broadly, thereby preventing the deflection of tank wall 8 more effectively. Supporting jig 25 may be configured also in a variety of shapes, for example, to accommodate the arrangement of heat transfer tubes 4.

Although the supporting jig is formed by using a plate-like member in each of the above-described first, second and third embodiments, the structure of the supporting jig is not critical. For example, the supporting jig may be formed with a rod-like member.

## Claims

1. A method for manufacturing a multi-tube heat exchanger having a pair of tanks separated from each other and a plurality of heat transfer tubes fluidly interconnecting said pair of tanks, characterized in that said method comprises the step of securing a supporting jig adjacent an outer surface of a tank wall of at least one tank of said pair of tanks so that said supporting jig extends through a gap between arranged heat transfer tubes, for supporting said tank wall and preventing deflection of said tank wall at least during a brazing process.

2. The method for manufacturing a multi-tube heat exchanger of claim 1, wherein a partition is provided in said at least one tank, and at least a portion of said supporting jig is disposed at a position of said tank wall corresponding to a position provided with said partition.

3. The method for manufacturing a multi-tube heat exchanger of claim 1 or 2, wherein said supporting jig comprises a linearly extending member.

4. The method for manufacturing a multi-tube heat exchanger of claim 1 or 2, wherein said supporting jig comprises a plurality of members.

5. The method for manufacturing a multi-tube heat exchanger of claim 4, wherein said supporting jig comprises two members intersecting each other.

6. The method for manufacturing a multi-tube heat exchanger of any preceding claim, wherein said at least one tank is an upper tank, and said supporting jig supports a lower wall of said upper tank from a lower side of said lower wall.

7. A method for manufacturing a multi-tube heat exchanger having a pair of tanks separated from each other and a plurality of heat transfer tubes fluidly interconnecting said pair of tanks by brazing said pair of tanks and said heat transfer tubes, characterized in that said method comprises the steps of:
fixing said pair of tanks in a holding jig prior to brazing, said holding jig being formed with a first material having a coefficient of thermal contraction lower than a coefficient of thermal contraction of a second material forming said heat transfer tubes;
securing a supporting jig adjacent an outer surface of a tank wall of at least one tank of said pair of tanks so that said supporting jig extends through a gap between arranged heat transfer tubes, for supporting said tank wall and preventing deflection of said tank wall at least during brazing; and
causing tension to said heat transfer tubes when cooled after brazing, the tension being applied parallel to an axial direction of said heat transfer tubes as a result of the difference of coefficients of thermal contraction of said heat transfer tubes and said holding jig.

8. The method for manufacturing a multi-tube heat exchanger of claim 7 further comprising the step of engaging (a) a first end portion of each of said heat transfer tubes with a tank wall of a first tank of said pair of tanks and (b) a second end portion of each of said heat transfer tubes with a tank wall of a second tank of said pair of tanks, said second end portion of each of said heat transfer tubes being movable relative to the tank wall of the second tank during the brazing process.

9. The method for manufacturing a multi-tube heat exchanger of claim 7 or 8, wherein said holding jig has a first portion for fixing said first tank, a second portion for fixing said second tank and a supporting portion extending between said first and second portions in a direction parallel to an axial direction of said heat transfer tubes, and at least said supporting portion is formed from said first material.

10. The method for manufacturing a multi-tube heat exchanger of any of claims 7 to 9, wherein a partition is provided in said at least one tank, and at least a part of said supporting jig is disposed at a position of said tank wall corresponding to a position provided with said partition.

11. The method for manufacturing a multi-tube heat exchanger of any of claims 7 to 10, wherein said supporting jig comprises a linearly extending member.

12. The method for manufacturing a multi-tube heat exchanger of any of claims 7 to 10, wherein said supporting jig comprises a plurality of members.

13. The method for manufacturing a multi-tube heat exchanger of claim 12, wherein said supporting jig comprises two members intersecting each other.

14. The method for manufacturing a multi-tube heat exchanger of any of claims 7 to 13, wherein said at least one tank is an upper tank, and said supporting jig supports a lower wall of said upper tank from a lower side of said lower wall.
